# EUROPEAN PATENT SPECIFICATION

(11) **EP 3 921 377 B1**
(45) Date of publication and mention of the grant of the patent: **10.04.2024**
(21) Application number: 20705795.1
(22) Date of filing: 06.02.2020
(51) Int. Cl.: C09D 7/61, B05D 5/08, C09D 7/63, C09D 127/12, C09D 127/18

(54) **PAINT FORMULATION FOR COOKWARE**
LACKFORMULIERUNG FÜR KOCHGESCHIRR
FORMULATION DE PEINTURE POUR BATTERIE DE CUISINE

(30) Priority: 06.02.2019 IT 201900001717
(43) Date of publication of application: 15.12.2021
(73) Proprietor: River S.p.A., 29027 Podenzano (PC) (IT)
(72) Inventor: FERRARI, Barbara, 29029 Rivergaro PC (IT)
(74) Representative: Santoro, Sofia
(86) International application number: PCT/IB2020/050950
(87) International publication number: WO 2020/161660

(56) References cited:
- WO-A1-2004/024348

## Description

### Field of the invention

The present invention belongs to the field of anti-adherent paints for cookware, and in particular it relates to a paint formulation, transparent and pigments-free, suitable for making an anti-adherent coating on a cookware article, to the cookware equipped with such coating, and to the process to prepare it.

### Background art

Paints for cookware suitable for providing an anti-adherent layer that should facilitate the detachment of cooked food from the pot and the cleaning of the latter are well known and have been used for decades. Research in this sector has focused mainly on the durability of these paints also at high cooking temperatures, so as to develop anti-adherent paint compositions with good adhesion to the metal or alloy of which the pot is made, being therefore more or less durable over the time.

Moreover, in more recent years, also in this field the demand has emerged for "green" materials realizable with non-polluting technologies and able to guarantee the absence of contamination of the foods contacting the anti-adherent composition during cooking. Various types of water-based anti-adherent paints have been proposed in the last years, made with sole water, without the aid of organic solvents that have always been used in the production of these formulations. These paint formulations on the one hand guarantee a cleaner production, with less polluting industrial discharges, and on the other they can boast greater safety for the end user in terms of migration of potentially toxic or harmful products in the food the anti-adherent coating comes in contact with.

One of the most used products in water-based anti-adherent paints is polytetrafluoroethylene (PTFE), insoluble in water but still usable for the preparation of the paint in form of an aqueous dispersion. The success of this product lies in the fact that it is highly stable and does not decompose at food cooking temperatures. Nevertheless, PTFE possesses a non-optimal capacity of adhesion to metal surfaces, therefore, in the preparation of anti-adherent paints, adhesion promoters are usually added, which improve its filmability, in particular acrylates and methacrylates. For example, WO2004/024348 describes an anti-adherent coating with adhesion promoters in both the basecoat and the topcoat. Unlike PTFE, these filming agents are less stable at high temperatures and, in the final heat-treatment phases of the anti-adherent coatings, are subject to decomposition phenomena generating decomposition byproducts that remain trapped in the coating, spoiling their transparency with a characteristic yellowish colour.

It is in order to mask this unwanted colouring that to date all the water-based anti-stick formulations of PTFE contain, in addition to the filming agents, also some pigments, present at least in the basecoat layer, the so-called primer, which is in contact with the metal surface of the pot. The presence of pigments - typically titanium dioxide, ultramarine blue, carbon black, iron oxides and pearlescent mica are used - even masking the yellow colour of the decomposition products inside the coating, deprives the finished product of transparency and brilliance, making it less attractive to the buyer, attracted instead, in a more modern conception of the kitchen and daily life, by natural looking products in which any anti-adherent coatings, if present, should be transparent and not deprive the product of naturalness, in addition to responding to the requests for health safety and functionality of the product.

### Summary of the invention

An aim of this invention is to provide cookware having the cooking surface intended for contacting food equipped with a coating of high and durable anti-adherence and transparent, obtained with a water-based paint formulation comprising fluoropolymers, pigments-free.

It has been found by the Applicant that the developed paint formulation, completely free of pigments, besides responding to the desired characteristics of transparency and naturalness of the coating, has a greater anti-adherence of the coating to food, which is also maintained much longer than the same products instead equipped with a conventional non-adherence coating containing pigments.

It has also been found that the introduction of a fluoropolymer, in particular perfluoroalkoxy PFA (tetrafluoroethylene-perfluoroalkyl vinyl ether copolymer), inserted in each layer of the coating, in combination with the absence of organic and inorganic pigments, allows to obtain coatings having increased anti-adherence with respect to the coatings known in the art.

Therefore, an object of the present invention is a transparent and pigment-free paint formulation, suitable for providing an anti-adherent coating on a cookware article, comprising two compositions, both in form of an aqueous dispersion, whose essential characteristics are defined in the first of the appended claims.

A further object of the invention is a cookware article comprising a water-based anti-adherent coating, the essential characteristics of which are defined in independent claim 10, and a process for making said article as defined in claim 12.

Further important characteristics of the paint formulation, of the cookware article, and of the process for producing it according to this invention are defined in the dependent claims herewith appended.

### Detailed description of the invention

In the context of the present invention with the term "cookware" are encompassed not only pots and pans for cooking, but also baking trays and backing sheets, oven grates, and more generally all items and utensils intended for cooking food.

With "upper surface" or "cooking surface" the surface of the article of cookware intended for contact or with food during cooking is meant; non-limiting examples of such surfaces are aluminium, steel or aluminized iron surfaces.

Unless otherwise specified, in the present invention, "weight %" of a component in a composition means its percentage by weight with respect to the total weight of the composition.

The present paint formulation is a water-based formulation, where with "water-based formulation" is meant that its components are dissolved or dispersed only in water, with the possible addition of minimal amounts of solvents miscible in water, and free of any toxicity. These are therefore water-soluble paint formulations that allow the use of only water in all stages of processing and painting, including the washing of all industrial equipment.

In an embodiment of this invention, the cookware has at least part of the top, or cooking, surface coated with one or more layers of the present formulation. Typically, the entire cooking surface of the cookware article is coated with the present formulation.

The Applicant found that, by excluding any type of pigment from the paint formulation based on fluoropolymers in aqueous dispersion and by using in place of an adhesion promoter to the cooking surface of the pot a thermostable polymer better specified below, an improved and longer lasting anti-adherent coating, as well as transparent and endowed with the natural brilliance of the uncoated metal was obtained. More particularly, it has been found that the absence of pigments in the present formulations, even in small quantities, emphasizes and brings out the anti-adherence properties of the coatings mainly attributable to the fluoropolymers present in the top composition S, so that for the same quantity and typology of fluoropolymers used in the top coating, the formulation of the present invention gives rise to a coating with improved anti-adherence with respect to the state of the art coatings. At the same time, the coating obtained with the formulation of the invention is perfectly transparent and maintains the bright appearance of the underlying metal surface, thanks to a base composition B which, subjected to the cooking phase of the paint, does not release any decomposition product.

The formulation object of the present invention is a paint formulation transparent and pigment-free, comprising two compositions, both in the form of an aqueous dispersion:
- a base composition B intended for the application on a cooking surface of a cookware article, comprising from about 10% to about 60% by weight of an adhesion promoter selected in the group consisting of polyphenylene sulphide (PPS), polyimide (PI), polyarylene sulphide (PAS), polyether sulfone (PES), polyamide-imide (PAI), and mixtures thereof; and
- a top composition S intended for application on the above-mentioned composition B as an anti-adherent finishing layer, comprising from about 40% to about 80% by weight of at least one fluorocarbon resin.

The composition B comprises one or more fluorocarbon resins or fluoropolymers, equal to or different from those comprised in the top composition S, for example polytetrafluoroethylene (PTFE), fluorinated ethylene propylene (FEP), perfluoroalkoxy (PFA tetrafluoroethylene-perfluoroalkyl vinyl ether copolymer) and mixtures thereof. The composition B comprises from 3 to 30%, preferably 10% of at least one fluorocarbon resin.

The composition S is free of adhesion promoting agents. By excluding any type of adhesion promoting agent from the surface composition S, the above-described decomposition phenomena are prevented, advantageously preserving the transparency of the coating. In a preferred embodiment of the invention, the top composition S comprises a fluorocarbon resin selected from polytetrafluoroethylene (PTFE), tetrafluoroethylene-perfluoroalkyl vinyl ether (PFA) copolymer and mixtures thereof.

In another embodiment of the invention, both composition B and composition S comprise PFA as the only fluorocarbon resin or in mixture with one or more other fluorocarbon resins.

Preferably, the composition B comprises at least 5% by weight of a fluoropolymer, such as for example PFA, having a melting temperature higher than 330°C.

Preferably, the composition S comprises at least 5% by weight of a fluoropolymer, such as for example PFA, having a melting temperature higher than 330°C, since this gives the finished product a particularly smooth coating with optimal anti-adherence characteristics. Preferred is a composition S in which the fluorocarbon resin consists of a mixture of PTFE and PFA, with at least 5% by weight of PFA.

In a particular embodiment, the paint formulation of the invention further comprises at least one intermediate composition M, intended for the application between the base composition B and the top composition S, comprising from about 50% to about 80% by weight of at least one fluorocarbon resin, of which preferably about 3-10% by weight, more preferably at least 5% by weight, consists of a fluorocarbon resin which has a melting point higher than 330°C, such as for example PFA. In an embodiment, the composition M also is free of adhesion promoters.

In an embodiment, the composition B and/or the top composition S and/or the intermediate composition M, if present, in the formulation of the invention can further comprise one or more of the following: surfactants, solvents, antifoaming agents, fillers, and mixtures thereof, in a total amount comprised between about 10 and about 60% by weight with respect to the total weight of the respective composition.

Preferred filling agents for use in the composition B and/or S and/or M, if present, are selected from the group consisting of barium sulphate, aluminium silicate, zinc oxide, quartz, wollastonite (calcium metasilicate), silicas, silicates and mixtures thereof.

According to a preferred embodiment of the formulation of the invention, the composition B and/or the top composition S and/or the intermediate composition M, if present, can further comprise a catalyst, for example a cerium-based catalyst.

In an embodiment of the formulation of the invention, the intermediate composition M if present and/or the top composition S further comprise an acrylic resin.

In a particular embodiment of the present invention, the base composition B and/or the intermediate composition M, if present, can further comprise a reinforcing agent, for example in an amount between 0.2 and 20% by weight compared to the total weight of the composition B or M, in order to give even greater resistance and hardness to the coatings. This optional reinforcing agent is generally a mineral compound with a Knoop scale hardness of at least 1200, and can have various particle size, identifiable from time to time by any technician with ordinary knowledge in the field. Examples of preferred reinforcing agents of this invention are inorganic oxides, nitrides, borides and carbides of zirconium, titanium, tungsten and aluminium; most preferred are silicon carbide and aluminium oxide; optimal results are obtained with the addition of aluminium oxide as a reinforcing agent. Below are exemplified, without being limited to them, preferred reinforcing agents for the formulations of the invention, with indication in brackets of the respective hardness on the Knoop scale:
zirconium oxide (1200);
aluminium nitride (1225);
zirconium nitride (1510);
zirconium boride (1560);
titanium nitride (1770);
tungsten carbide (1880);
aluminium oxide (2025);
zirconium carbide (2150);
titanium carbide (2470);
silicon carbide (2500);
aluminium boride (2500);
titanium boride (2850).

Processes suitable but not limiting that are used for depositing the coating with the formulation of the invention are roller coating, and spray coating. In both cases it is possible to quickly obtain even very thin and perfectly uniform coatings on the surface to be coated.

After the deposition of the base composition B, it is typically subjected to heating , for example at a temperature of about 100-120°C for about 5 minutes, which leads to the coating of the base layer or primer to solidification before the deposition of the top composition S or of the intermediate composition M if present, which in both cases typically occurs at room temperature, to end with a final sintering step of the deposited multilayer coating, by heating for example for 3-6 minutes at a temperature between about 400 and about 440°C.

In a preferred embodiment of the invention, the base layer in the coating obtained after drying of the composition B on the cooking layer of the pot has a thickness of between 2.0 and 25 micrometres; the middle layer, if present, has a thickness of between 15 and 20 micrometres, and a thickness of the upper layer of between 10 and 15 micrometres.

The thickness of the coating made on a cookware article with the present formulation by spray application preferably has a thickness, understood as the average thickness of the dry film, between 35 and 50 micrometres, and between 15 and 35 micrometres when made by roller application.

The following non-limiting examples for the preparation of the present formulation and to the its use for coating a substrate, for example aluminium, are illustrated in order to better understand the present invention.

### EXAMPLES

### EXAMPLE 1

### Preparation of the base composition B of the formulation of the invention

A base composition B was prepared with the ingredients indicated in Table 1 below, firstly grinding the polymers, then mixing the ground material with water to form aqueous dispersions of each polymer, and then mixing everything together also with the other wetting agents, surfactants, etc., in the amounts indicated as a percentage by weight of the single ingredient with respect to the total weight of the composition.

**Table 1**

| Ingredients | Amount (% w/w) |
|---|---|
| PES (solid powder) | 16.00 |
| Water | 55.45 |
| Dimethylethanolamine | 0.60 |
| Triethanolamine | 1.51 |
| N-methylpyrrolidone | 2.80 |
| Furfuryl alcohol | 1.50 |
| Surfynol^{®} 440 | 0.28 |
| PTFE | 10.00 |
| Alkylphenylethoxy surfactant | 1.59 |
| FEP | 4.00 |
| Ludoe AM polysilicate | 0.87 |
| Alumina 5-35 micrometers | 5.40 |

### Preparation of the top composition S of the formulation of the invention

A top composition S was prepared with the ingredients indicated in Table 2 below, first grinding the polymers, then mixing the ground material with water to form aqueous dispersions of each polymer, and then mixing everything together also with the other wetting agents, surfactants, etc., in the quantities indicated as a percentage by weight of the single ingredient with respect to the total weight of the composition.

**Tabella 2**

| Ingredients | Amount (% w/w) |
|---|---|
| PTFE | 52.75 |
| Water | 26.08 |
| Tergitol^{®} | 4.00 |
| PFA | 3.40 |
| Alkylphenylethoxy surfactant | 1.36 |
| Borosilicate | 0.63 |
| Cerium octoate | 0.60 |
| Oleic acid | 1.23 |
| Butyl Carbitol | 1.55 |
| Triethanolamine | 5.96 |
| Solvesso 100 | 1.94 |
| Acrysol Ase 60 | 0.50 |

### EXAMPLE 2

### Preparation of the anti-adherent coating on an aluminium surface

The base composition B prepared as described above was sprayed onto a substrate having a flat surface in aluminium, or steel or aluminized iron and then heated to about 110°C for 5 minutes until completely dry.

After cooling the surface to room temperature, it was verified that the deposited base layer was completely dry, then the top composition S, prepared as described above in Example 1, was applied by spray.

After ending the deposition of the top layer, the aluminium substrate was placed in an oven for 5 minutes at a temperature of 420°C.

The total thickness of the B, S and when present M, coating is 40 - 55 microns.

### EXAMPLE 3

### Comparative tests

Abrasion tests and non-adherence tests were carried out by comparing different coatings composed of base compositions B as shown in Table 3 below and surface compositions S as shown in Table 4 below. Where there are also middle compositions M, these have the same compositions as the surface compositions S indicated in Table 4.

**Table 3**

| Composition B Ingredients | B1 | B2 | B3 | B4 |
|---|---|---|---|---|
| | Amount (% w/w) | | | |
| PES (solid powder) | 16.00 | 16.00 | | |
| PAI (34% solution) | | | 40.00 | |
| PPS (Ryton V1) | | | | 35.00 |
| Water | 55.45 | 55.45 | 31.45 | 26.40 |
| Dimethylethanolamine | 0.60 | 0.60 | 0.60 | 0.60 |
| Triethanolamine | 1.51 | 1.51 | 1.51 | 1.51 |
| N-Methylpyrrolidone | 2.80 | 2.80 | 2.80 | 2.80 |
| Furfuryl alcohol | 1.50 | 1.50 | 1.50 | 1.50 |
| Monoethylene glycol | | | | 10.00 |
| Surfynol^{®} 440 | 0.28 | 0.28 | 0.28 | 0.28 |
| PTFE | 10.00 | | 10.00 | 10.00 |
| Alkylphenylethoxy surfactant | 1.59 | 1.59 | 1.59 | 1.59 |
| PFA | | 10,00 | | |
| EFF | 4.00 | 4.00 | 4.00 | 4.00 |
| Ludox^{®} AM polysilicate | 0.87 | 0.87 | 0.87 | 0.87 |
| Alumina 5-35 micrometers | 5.40 | 5.40 | 5.40 | 5.40 |
| | 100 | 100 | 100 | 100 |

**Table 4**

| Composition S and/or M Ingredients | S5 | S6 | S7 |
|---|---|---|---|
| | Amount (% w/w) | | |
| PTFE (60% on dry weight) | 52.75 | 46.15 | 0.00 |
| Water | 26.08 | 26.08 | 37.00 |
| Tergitol^{®} | 4.00 | 4.00 | 4.00 |
| PFA | 3.40 | 10.00 | 45.00 |
| Alkylphenylethoxy surfactant | 1.36 | 1.36 | 1.36 |
| Borosilicate | 0.63 | 0.63 | 0.63 |
| Cerium octoate | 0.60 | 0.60 | 0.60 |
| Oleic acid | 1.23 | 1.23 | 1.23 |
| Butyl carbitol | 1.55 | 1.55 | 1.55 |
| Triethanolamine | 5.96 | 5.96 | 5.96 |
| Solvesso 100 | 1.94 | 1.94 | 1.94 |
| Acrysol Ase 60 | 0.50 | 0.50 | 0.50 |
| | 100 | 100 | 100 |

### Abrasion resistance test

The abrasion resistance test is carried out to evaluate the abrasion resistance of anti-adherent coatings. This test is based on the British standard specification for kitchen articles BS 7069:1988 in which the coating system is subjected to the action of an apparatus equipped with an abrasive pad attached to a vertical arm. The arm performs a controlled horizontal movement of 100 mm ± 5 mm from the centre of the cylinder at an average speed of 0.10 m/min. The abrasive pad (3M Scotch-Brite 7447) consists of a nylon tape impregnated with phenolic resin and aluminium oxide, fixed to the cylinder and loaded to apply a total force of 15 N (arm mass + dead weight = 4.5 kg or 10 lbs) on the coating.

The test sample is prepared by coating a substrate as explained in the examples with drying and cooking as specified therein. The coated substrate is tested as prepared, without washing. The coated substrate is fixed on a fixed support and the loaded abrasive pad is applied to the anti-adherent surface. The sample is held still while the abrasive pad is moved back and forth for a distance of 50 mm ± 2.5 mm on both sides of the central point of the cylinder. The abrasive scouring pad is rotated after 250 cycles and renewed after another 250 cycles. This procedure continues until the metal is visible and then the number of cycles for the coating is recorded. The end point of the test is when 10% of the substrate is uncovered.

### Anti-adherence test

A pan coated with the anti-adherent paint described herein is heated from 190°C to 200°C and maintained in this temperature range throughout the anti-adherence test, monitoring with a contact thermometer.
Once the pan has reached the desired temperature, an egg is cooked for 3 minutes. The egg is lifted with a spatula and the pan is tilted to allow the egg to slide. The ease with which the spatula removes the egg from the anti-adherent coating, *i.e.* the degree of release of the coating, is assessed with a classification ranging from 1 to 4, where 1 means insufficient; 2 means sufficient; 3 means discrete and 4 means excellent.

This release test is repeated after every 1000 cycles of the abrasion resistance test carried out on the anti-adherent coating. For all anti-adherent coatings exemplified, including comparative coatings (B4 + S5), the egg was removed from the anti-adherent surface through the use of a spatula, for the entire duration of the coating in the abrasion resistance test. Experiments carried out with the various coatings show that the use of perfluoroalkoxy PFA (tetrafluoroethylene-perfluoroalkyl vinyl ether copolymer) results in an unexpected performance in the anti-adherent properties of the painted article. In fact, as shown in Table 5 below, the B2 + S6 coating (B2 10% PFA + S6 10% PFA) has a good anti-adherence (3) and good abrasion resistance (up to 26000 cycles). In addition it has been found also that, by increasing the amount of PFA, the abrasion resistance and anti-adherence of the coating definitely improve. In fact, as shown in Table 5, the B2 + S7 coating (B2 10% PFA + S7 45% PFA) has an excellent anti-adherence (4) and an excellent abrasion resistance (up to 44000 cycles).
The combined results of abrasion and anti-adherence also show that the use of PFA in all the layers of the coating to replace PTFE allows to obtain a better coating, especially in terms of anti-adherence (compare B4 + S5 with B2 + S7).

**Table 5**

| Combination | Results of abrasion resistance and anti-adherence tests |
|---|---|
| B1 + S5 | after 20000 cycles; anti-adherence 2 |
| B2 + S5 | after 20000 cycles; anti-adherence 3 |
| B3 + S5 | after 20000 cycles; anti-adherence 2 |
| B4 + S5 | after 15000 cycles; anti-adherence 1 |
| B1 + S6 | after 22000 cycles; anti-adherence 3 |
| B2 + S6 | after 26000 cycles; anti-adherence 3 |
| B3 + S6 | after 18000 cycles; anti-adherence 2 |
| B4 + S6 | after 15000 cycles; anti-adherence 2 |
| B1 + S7 | after 22000 cycles; anti-adherence 3 |
| B2 + S7 | after 44000 cycles; anti-adherence 4 |
| B3 + S7 | after 20000 cycles; anti-adherence 2 |
| B4 + S7 | after 18000 cycles; anti-adherence 2 |

The base compositions B1 and B2 comprising polyetheresulfone (PES) showed superior non-adherence with respect to systems B3 and B4 comprising polyamide-imide (PAI) and polyphenylene sulphide (PPS), respectively.

Furthermore, the base compositions B1 and B2 comprising polyetheresulfone (PES), at the visual inspection, show a system transparency clearly superior to the B3 systems comprising polyamide-imide (PAI) and polyphenylene sulphide (PPS).

## Claims

1. A paint formulation, transparent and pigments-free, suitable for providing an anti-adherent coating on a cookware article, comprising at least two compositions, both in form of an aqueous dispersion:
- a base composition B for application on a cooking surface of a cookware article, comprising from 10% to 60% by weight of an adhesion promoter selected from the group consisting of polyphenylene sulphide (PPS), polyimide (PI) polyarylene sulphide (PAS), polyether sulfone (PES), polyamide-imide (PAI) and mixtures thereof, wherein said base composition B further comprises from 3% to 30% by weight of at least one fluorocarbon resin; and
- a top composition S for application on said base composition B as an anti-adherent finishing layer, comprising from 40% to 80% by weight of at least a fluorocarbon resin, wherein said composition S is free of adhesion promoters.

2. The formulation of claim 1, further comprising at least an intermediate composition M, for application between said base composition B and said top composition S, comprising from 50% to 80% by weight of at least a fluorocarbon resin.

3. The formulation of claims 1 or 2, wherein said fluorocarbon resin in the base composition B and/or in the top composition S and/or in the intermediate composition M comprises, or consists of, at least one fluoropolymer selected from polytetrafluoroethylene (PTFE), perfluoroalkoxy PFA (tetrafluoroethylene-perfluoroalkyl vinyl ether copolymer), fluorinated ethylene propylene (FEP) and mixtures thereof.

4. The formulation of any one of claims 1-3, wherein said composition B and/or S and/or M comprises at least 5% by weight of a fluoropolymer having a melting point higher than 330°C.

5. The formulation of any one of claims 1-4, wherein said composition B and/or said top composition S and/or said intermediate composition M, if present, comprises PFA.

6. The formulation of any one of claims 1-5, wherein said adhesion promoter in the base composition B is polyether sulfone (PES).

7. The formulation of any one of claims 1-6, in which said base composition B and/or top composition S and/or intermediate composition M, if present, comprises also one or more of the following: surfactants, solvents, antifoaming agents, fillers, and mixtures thereof, in a total amount ranging between 10 and 60% by weight with respect to the total weight of the respective composition.

8. The formulation of any one of claims 1-7 wherein said composition B and/or said top composition S and/or said intermediate composition M, if present, further comprises a cerium-based catalyst, preferably cerium octoate.

9. The formulation of any one of claims 1-8, wherein said composition B and/or said intermediate composition M, if present, further comprises, as reinforcing agent, a mineral compound with a Knoop scale hardness of at least 1200 in an amount comprised between 0.2 and 20% by weight with respect to the total weight of composition B or M.

10. A cookware article having at least a surface intended for contacting food coated with one or more layers of the paint formulation as defined in claims 1-9.

11. The article of claim 10, wherein said surface is a surface of aluminium, steel, or aluminized iron.

12. A process for the manufacture of a cookware article as defined in claims 10-11, comprising the application on said surface of a base composition B and heating at a temperature of 100-120°C for 5 minutes, followed by the application at room temperature of the top composition S preceded, if present, by the intermediate composition M, and by the sintering of the multi-layered coating deposited, by heating at a temperature of 400-440°C for 3-6 minutes, in which the application of the compositions is carried out by spray or roller coating.

## Patentansprüche

1. Lackformulierung, transparent und pigmentfrei, geeignet zum Bereitstellen einer Antihaftbeschichtung auf einem Kochgeschirrartikel, umfassend mindestens zwei Zusammensetzungen, beide in Form einer wässrigen Dispersion:
- eine Basiszusammensetzung B für eine Anwendung auf einer Kochgeschirroberfläche eines Kochgeschirrartikels, umfassend von zu 10 Gew.-% bis 60 Gew.-% einen Haftvermittler, ausgewählt aus der Gruppe bestehend aus Polyphenylensulfid (PPS), Polyimid (PI), Polyarylensulfid (PAS), Polyethersulfon (PES), Polyamidimid (PAI) und Mischungen davon, wobei die Basiszusammensetzung B ferner von zu 3 Gew.-% bis 30 Gew.-% mindestens einen fluorhaltigen Kunststoff umfasst; und
- eine obere Zusammensetzung S für die Anwendung auf der Basiszusammensetzung B als eine Antihaftdeckschicht, umfassend von zu 40 Gew.-% bis 80 Gew.-% mindestens einen fluorhaltigen Kunststoff, wobei die Zusammensetzung S frei von Haftvermittlern ist.

2. Formulierung nach Anspruch 1, ferner umfassend mindestens eine Zwischenzusammensetzung M für die Anwendung zwischen der Basiszusammensetzung B und der oberen Zusammensetzung S, umfassend von zu 50 Gew.-% bis 80 Gew.-% mindestens eine fluorhaltigen Kunststoff.

3. Formulierung nach Anspruch 1 oder 2, wobei der fluorhaltige Kunststoff in der Basiszusammensetzung B und/oder in der oberen Zusammensetzung S und/oder in der Zwischenzusammensetzung M mindestens ein Fluorpolymer umfasst oder daraus besteht, das aus Polytetrafluorethylen (PTFE), Perfluoralkoxy PFA (Tetrafluorethylen-Perfluoralkylvinylether-Copolymer), fluoriertem Ethylenpropylen (FEP) und Mischungen davon ausgewählt ist.

4. Formulierung nach einem der Ansprüche 1 bis 3, wobei die Zusammensetzung B und/oder S und/oder M mindestens zu 5 Gew.-% ein Fluorpolymer umfasst, das einen Schmelzpunkt höher als 330 °C aufweist.

5. Formulierung nach einem der Ansprüche 1 bis 4, wobei die Zusammensetzung B und/oder die obere Zusammensetzung S und/oder die Zwischenzusammensetzung M, falls vorhanden, PFA umfasst.

6. Formulierung nach einem der Ansprüche 1 bis 5, wobei der Haftvermittler in der Basiszusammensetzung B Polyethersulfon (PES) ist.

7. Formulierung nach einem der Ansprüche 1 bis 6, wobei die Basiszusammensetzung B und/oder die obere Zusammensetzung S und/oder die Zwischenzusammensetzung M, falls vorhanden, ebenso eines oder mehrere der Folgenden umfasst: Tenside, Lösungsmittel, Antischaummittel, Füllstoffe und Mischungen davon in einer Gesamtmenge in einem Bereich zwischen 10 und 60 Gew.-% in Bezug auf das Gesamtgewicht der jeweiligen Zusammensetzung.

8. Formulierung nach einem der Ansprüche 1 bis 7, wobei die Zusammensetzung B und/oder die obere Zusammensetzung S und/oder die Zwischenzusammensetzung M, falls vorhanden, ferner einen Katalysator auf Cerbasis, vorzugsweise Ceroctoat, umfasst.

9. Formulierung nach einem der Ansprüche 1 bis 8, wobei die Zusammensetzung B und/oder die Zwischenzusammensetzung M, falls vorhanden, ferner als Verstärkungsmittel eine Mineralverbindung mit einer Knoop-Skala-Härte von mindestens 1200 in einer Menge umfasst, die zu zwischen 0,2 und 20 Gew.-% in Bezug auf das Gesamtgewicht der Zusammensetzung B oder M enthalten ist.

10. Kochgeschirrartikel, der mindestens eine Oberfläche aufweist, die zum Inberührungbringen mit Lebensmitteln bestimmt ist, die mit einer oder mehreren Schichten der Lackformulierung wie in den Ansprüchen 1 bis 9 definiert, beschichtet ist.

11. Artikel nach Anspruch 10, wobei die Oberfläche eine Oberfläche aus Aluminium, Stahl oder aluminiertem Eisen ist.

12. Verfahren für die Herstellung eines Kochgeschirrartikels nach den Ansprüchen 10 bis 11, umfassend die Anwendung auf der Oberfläche einer Basiszusammensetzung B und Erhitzen bei einer Temperatur von 100-120 °C für 5 Minuten, gefolgt durch die Anwendung bei Raumtemperatur der oberen Zusammensetzung S, falls vorhanden, der Zwischenzusammensetzung M, und durch das Sintern der mehrschichtigen Beschichtung, die durch Erhitzen bei einer Temperatur von 400-440 °C für 3-6 Minuten abgeschieden wird, wobei die Anwendung der Zusammensetzungen durch Sprüh- oder Walzenbeschichtung ausgeführt wird.

## Revendications

1. Formulation de peinture, transparente et exempte de pigments, appropriée pour fournir un revêtement antiadhérent sur un article d'ustensile de cuisine, comprenant au moins deux compositions, toutes deux sous forme d'une dispersion aqueuse :
- une composition de base B pour application sur une surface de cuisson d'un article d'ustensile de cuisine, comprenant de 10 % à 60 % en poids d'un promoteur d'adhérence choisi dans le groupe constitué de sulfure de polyphénylène (PPS), sulfure de polyarylène (PAS) polyimide (PI), polyéther sulfone (PES), polyamide-imide (PAI) et des mélanges de ceux-ci, dans laquelle ladite composition de base B comprend en outre de 3 % à 30 % en poids d'au moins une résine fluorocarbonée ; et
- une composition supérieure S pour application sur ladite composition de base B en tant que couche de finition antiadhérente, comprenant de 40 % à 80 % en poids d'au moins une résine fluorocarbonée, ladite composition S étant exempte de promoteurs d'adhérence.

2. Formulation selon la revendication 1, comprenant en outre au moins une composition intermédiaire M, pour application entre ladite composition de base B et ladite composition supérieure S, comprenant de 50 % à 80 % en poids d'au moins une résine fluorocarbonée.

3. Formulation selon les revendications 1 ou 2, dans laquelle ladite résine fluorocarbonée dans la composition de base B et/ou dans la composition supérieure S et/ou dans la composition intermédiaire M comprend, ou consiste en, au moins un fluoropolymère choisi parmi polytétrafluoroéthylène (PTFE), perfluoroalcoxy PFA (copolymère de tétrafluoroéthylène et d'éther vinylique perfluoroalkyle), éthylène-propylène fluoré (FEP) et des mélanges de ceux-ci.

4. Formulation selon l'une quelconque des revendications 1 à 3, dans laquelle ladite composition B et/ou S et/ou M comprennent au moins 5 % en poids d'un fluoropolymère ayant un point de fusion supérieur à 330 °C.

5. Formulation selon l'une quelconque des revendications 1 à 4, dans laquelle ladite composition B et/ou ladite composition supérieure S et/ou ladite composition intermédiaire M, si elles sont présentes, comprennent du PFA.

6. Formulation selon l'une quelconque des revendications 1 à 5, dans laquelle ledit promoteur d'adhérence dans la composition de base B est une polyéther sulfone (PES).

7. Formulation selon l'une quelconque des revendications 1 à 6, dans laquelle ladite composition de base B et/ou composition supérieure S et/ou composition intermédiaire M, si elles sont présentes, comprennent également un ou plusieurs des éléments suivants : agents tensioactifs, solvants, agents antimousse, charges, et mélanges de ceux-ci, en une quantité totale allant de 10 à 60 % en poids par rapport au poids total de la composition respective.

8. Formulation selon l'une quelconque des revendications 1 à 7, dans laquelle ladite composition B et/ou ladite composition supérieure S et/ou ladite composition intermédiaire M, si elles sont présentes, comprennent en outre un catalyseur à base de cérium, de préférence l'octoate de cérium.

9. Formulation selon l'une quelconque des revendications 1 à 8, dans laquelle ladite composition B et/ou ladite composition intermédiaire M, si elles sont présentes, comprennent en outre, en tant qu'agent de renforcement, un composé minéral avec une dureté à l'échelle Knoop d'au moins 1200 en une quantité comprise entre 0,2 et 20 % en poids par rapport au poids total de la composition B ou M.

10. Article d'ustensile de cuisine ayant au moins une surface destinée à venir en contact avec un aliment revêtue d'une ou plusieurs couches de la formulation de peinture telle que définie dans les revendications 1 à 9.

11. Article selon la revendication 10, dans lequel ladite surface est une surface d'aluminium, d'acier, ou de fer aluminisé.

12. Procédé de fabrication d'un article d'ustensile de cuisine tel que défini dans les revendications 10 et 11, comprenant l'application sur ladite surface d'une composition de base B et le chauffage à une température de 100 à 120 °C pendant 5 minutes, suivi de l'application à température ambiante de la composition supérieure S précédée, si elle est présente, par la composition intermédiaire M, et par le frittage du revêtement multicouche déposé, par chauffage à une température de 400 à 440 °C pendant 3 à 6 minutes, dans lequel l'application des compositions est effectuée par enduction à pulvérisation ou à rouleau.
